# EUROPEAN PATENT APPLICATION

(11) **EP 3 968 440 A1**
(43) Date of publication of application: **16.03.2022**
(21) Application number: 21195054.8
(22) Date of filing: 06.09.2021
(51) Int. Cl.: H01M 10/6557, H01M 10/625, H01M 10/643, H01M 10/653, H01M 10/6567, H01M 50/213

(54) **LIQUID FILLED HEAT EXCHANGER FOR CYLINDRICAL BATTERY CELLS**

(30) Priority: 10.09.2020 CZ 20200506
(71) Applicant: Novacek, Tomas, 68601 Stare Mesto (CZ)
(72) Inventor: Novacek, Tomas, 68601 Stare Mesto (CZ)
(74) Representative: Dadej, Leopold

(57) **Abstract**

A liquid filled heat exchanger for cylindrical battery cells designed for thermal regulation of battery modules for electric vehicles, composed of polymer tubes with integrated channels and at least one manifold with a bleed valve, chambers, and ports, which can be preferably used to save space, weight, and production costs or to increase the number of battery cells.

## Description

### Technical Field

The invention relates to the field of heat exchangers, in particular for cooling or heating cylindrical battery cells (accumulators), which are arranged side by side or on top of each other to form a battery module, which is used, for example, in electric vehicles as an energy source.

More specifically, it relates to a heat exchanger containing polymer tubes with integrated channels through which the thermally regulated medium flows.

### Background of the Invention

Currently, aluminium heat exchangers are used for thermal regulation of cylindrical battery cells and assemblies thereof into battery modules. These heat exchangers are composed of extruded aluminium tubes provided with electrical insulation and mutually joined by inlet and outlet connection chambers, which complete and close the internal circuit of the heat exchanger in which the liquid heat transfer medium, usually a mixture of water and glycol, flows. Cooling extruded tubes with electrical insulation are pre-formed and placed between the individual battery cells.

The required functionality of the heat exchanger and the efficiency of heat transfer between the cooling tubes and the cooled battery cells depend on their permanent contact and the size of the heat transfer area, the thickness and thermal transmittance of the electrical insulation. The size of the heat transfer area also depends on the flexibility and the resulting minimum bending radius of the heat transfer tube, which allows better shaping of the tube around the battery cells.

As a result of vibration, thermal and compressive stresses during operation, cracks form at the joint points between the aluminium chambers and the tubes soldered thereto, which subsequently leak the cooling medium which causes a critical failure of the entire system.

In order to ensure sufficient heat transfer area and permanent contact, high demands are placed on the precision of the production of the cooling tubes and all cooled components, resulting in increased production costs. The different thermal expansion of the individual components placed close to the heat exchanger can temporarily cause a loss of contact of the heat transfer areas or, in the opposite case, an undesired deformation of the heat exchanger and subsequent formation of a crack and leakage of the medium. The use of aluminium heat exchangers causes an undesirable significant increase in weight and footprint dimensions of the battery modules.

All components made of electrically conductive materials and in areas where there is a risk of short-circuiting the battery module must be provided with electrical insulation, which increases production costs, weight, and footprint dimensions and reduces heat transfer efficiency.

The object of this invention is to create a compact heat exchanger for cylindrical battery cells that will have a higher heat transfer efficiency and thus higher thermal performance with the ability to efficiently absorb vibration and thermal expansion of the individual components without the need for additional electrical insulation of the individual components. At the same time, weight, footprint dimensions, and production precision requirements are reduced.

### Summary of the Invention

The above mentioned object is achieved by a heat exchanger for cylindrical battery cells, the essence of which are polymer tubes with integrated channels, sometimes also called "multiport" tubes, both ends of which open into a single manifold with two integrated channels. The supply and drainage of the heat transfer liquid is provided by inlet and outlet ports which connect the heat exchanger to the cooling circuit of the vehicle. The inlet and outlet chambers connect the ports to the manifold and direct the flow of the heat transfer liquid. The polymer tubes are connected to the manifold by means of a seal that is capable of absorbing the vibration and thermal expansion of the individual components. The seal is seated in a groove on the manifold or flange and then compressed by connecting the flange to the manifold. The ports, chambers, manifold, and flange may be joined by gluing, welding, screw or other mechanical joints. The entire heat exchanger can be made of electrically non-conductive materials and therefore does not need additional electrical insulation.

One of the two integrated channels in the manifold is provided with a bleed valve, which is located at the highest point of the heat exchanger after the heat exchanger is installed in the battery module, thus allowing the heat exchanger to be filled correctly and completely with liquid.

The specific profile and small wall thickness of the polymer tube with the integrated channels allows easy shaping around the battery cells and more efficient heat transfer between the heat transfer liquid flowing in the polymer tube and the battery cells, which are in close and, thanks to the flexibility of the polymers, permanent contact. At no point in the polymer tube is the profile collapsed and subsequently blinded, cracked, or otherwise damaged.

This creates a liquid filled heat exchanger for cylindrical battery cells with significantly higher performance, lower weight and production costs, more compact dimensions, and without the need for additional electrical insulation. The space, weight, and money saved can be used to increase the number of battery cells and the use of a bleed valve simplifies the filling of the heat exchanger without the need for additional handling.

### Description of Drawings

The invention will be further clarified using examples of possible embodiments of the liquid filled heat exchanger for cylindrical battery cells.

Variant no. 1:
Fig. 1. - an axonometric view of the assembly breakdown of a possible embodiment of the heat exchanger.
Fig. 2. - a longitudinal section through the centre of the 1st of 2 integrated channels of a manifold.
Fig. 3. - a transverse section through a flange and polymer tubes.

Variant no. 2:
Fig. 4. - an axonometric view of the assembly breakdown of a possible embodiment of the heat exchanger.
Fig. 5. - a longitudinal section through the centre of the 1st of 2 integrated channels of a manifold.
Fig. 6. - a transverse section through flanges and polymer tubes.

Variant no. 3:
Fig. 7. - an axonometric view of the assembly breakdown of a possible embodiment of the heat exchanger.
Fig. 8. - a longitudinal section through the centre of the 1st of 2 integrated channels of a manifold.
Fig. 9. - a transverse section through the manifold, seal, and polymer tubes.
Fig. 10. - transverse sections of two different polymer tubes with integrated channels.

### Exemplary Embodiment of the Invention

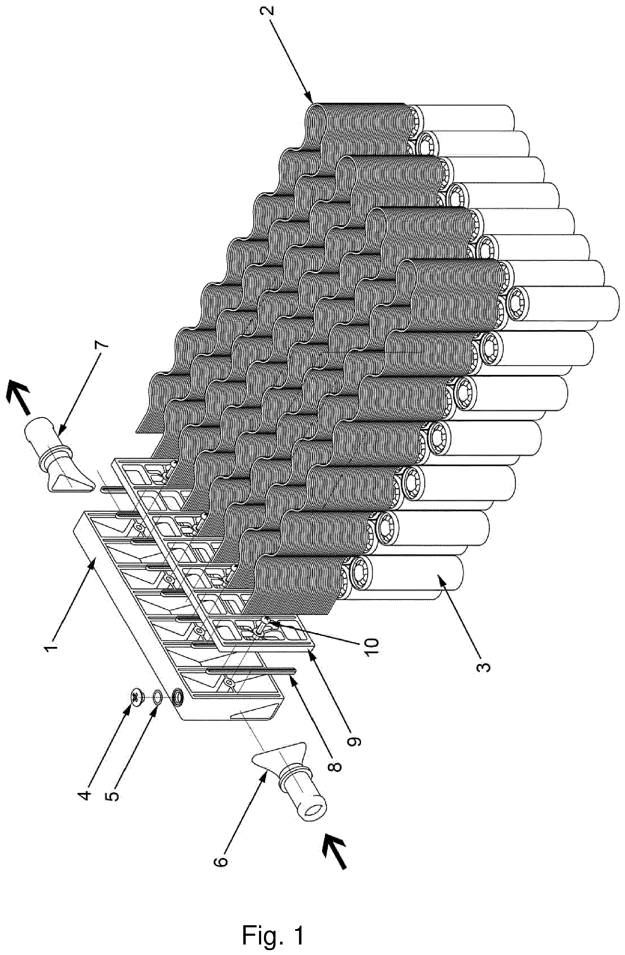

The liquid filled heat exchanger for cylindrical battery cells, with assembly breakdown shown in Fig. 1, consists of four polymer tubes with integrated channels 2, both ends of which are first passed through designated openings in a flange 9 and then through eight seals 8, which are then placed in grooves in the flange 9. The flange 9, by joining a manifold 1, creates pressure on the seal 8 and mutually seals the flange 9 to the manifold 1 and the ends of the four polymer tubes to the integrated channels 2. An inlet chamber 6 and outlet chamber 7 are connected to the manifold 1, e.g., by vibration welding, gluing, or a mechanical joint. The manifold 1 is provided with a bleed valve 4 with a seal of the valve 5. The flange 9 is connected to the manifold 1 by four screw joints 10. This type of a joint can be replaced by welding, gluing, or other mechanical joints. The cylindrical battery cells 3 are seated between the polymer tubes with the integrated channels 2 such that close contact between the heat transfer areas is achieved and space is saved.

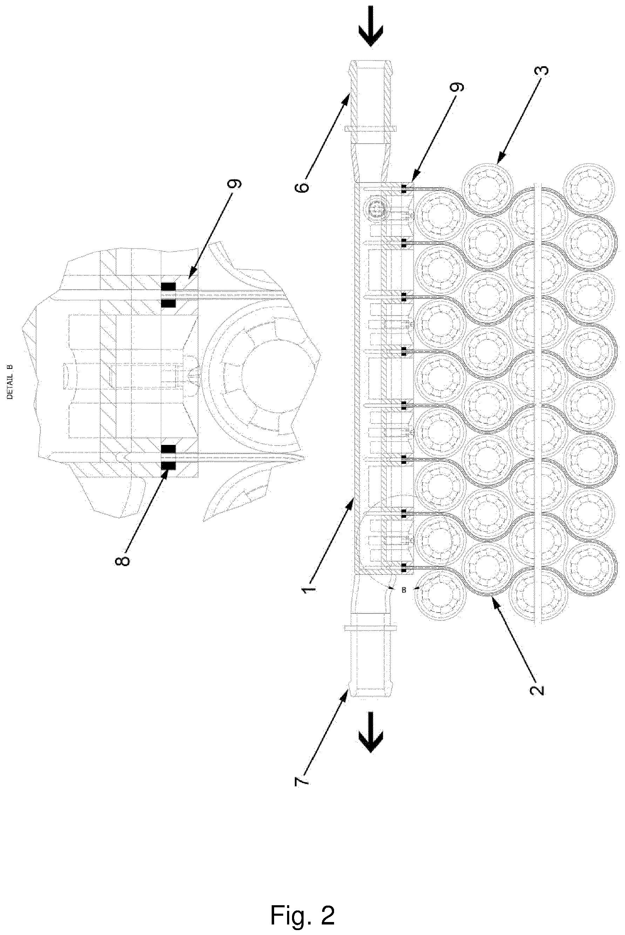

In Fig. 2, a longitudinal section through the centre of one of the two integrated channels of the manifold 1 is shown, together with detail B of the seating of the seal 8 in the groove on the flange 9 and the seal of the manifold 1 and the polymer tube with the integrated channels 2. The longitudinal section shows the more efficient one - one of the two variants of seating the polymer tubes with the integrated channels 2 between the battery cells 3.

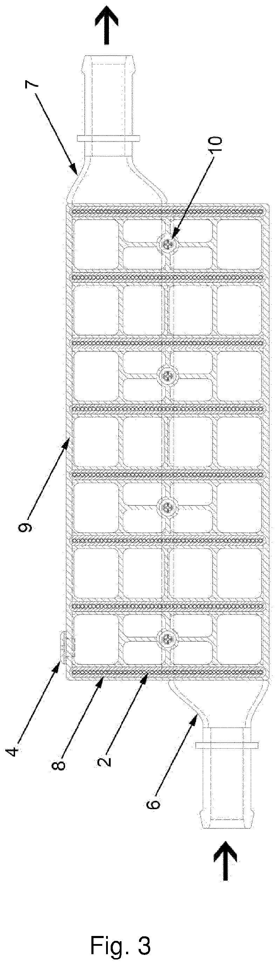

In Fig. 3, a transverse section through the flange 9 and the polymer tubes with the integrated channels 2 is shown, showing the four screw joints 10 of the flange 9 and the manifold 1, which can be replaced by e.g., a suitable shape joint, welding, or gluing.

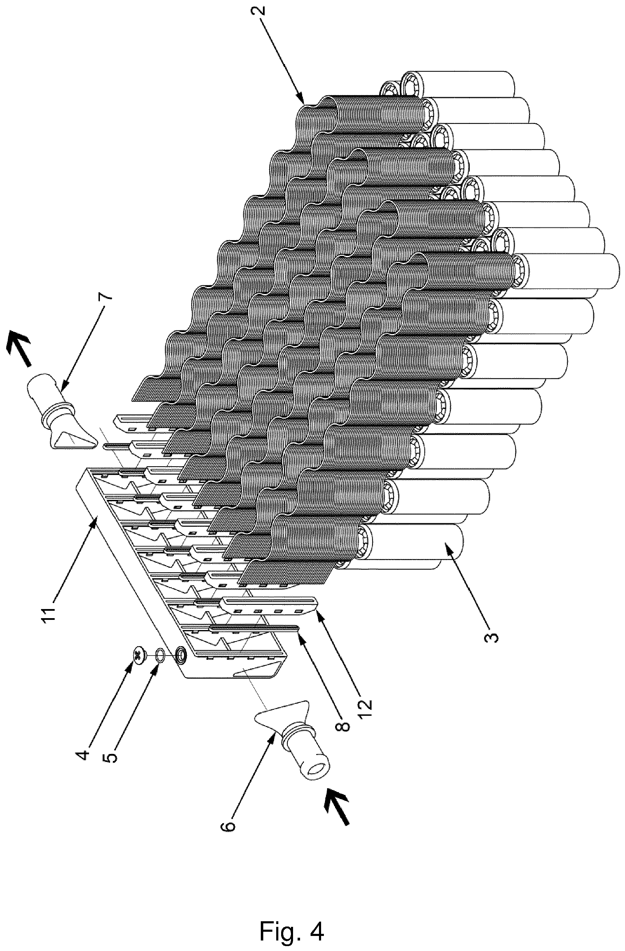

A similar variant of the heat exchanger for liquid filled cylindrical battery cells, with assembly breakdown shown in Fig. 4, consists of four polymer tubes with the integrated channels 2, the ends of which are first passed through the designated openings in flanges 12 and then through the seals 8, which are then placed in grooves in the flanges 12. The flange 12, by joining the manifold 11, creates pressure on the seal 8 and mutually seals the flanges 12 to the manifold 11 and the ends of the four polymer tubes to the integrated channels 2. The inlet chamber 6 and the outlet chamber 7 are connected to the manifold 11, e.g., by vibration welding, gluing, or a mechanical joint. The manifold 11 is provided with the bleed valve 4 with the seal of the valve 5. The flanges 12 are individually connected to the manifold 11 by means of a shape joint. This type of joint can be replaced by welding, gluing, or other mechanical joints. The cylindrical battery cells 3 are seated between the polymer tubes with the integrated channels 2 such that close contact between the heat transfer areas is achieved and space is saved.

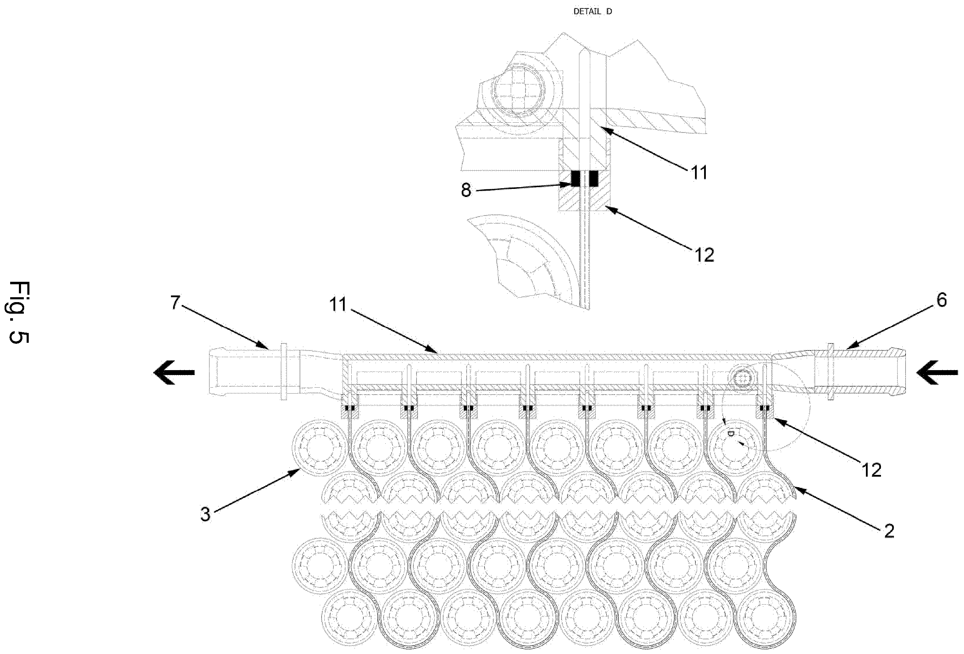

In Fig. 5, a longitudinal section through the centre of one of the two integrated channels of the manifold 11 is shown, together with detail D of the seating of the seal 8 in the groove on the flange 12 and the seal of the manifold 11 and the polymer tube with the integrated channels 2 and the shape joint of the flange 12 with the manifold 11.

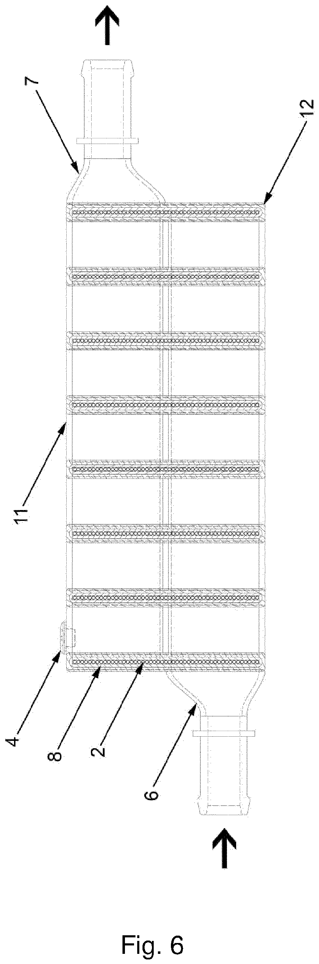

In Fig. 6, a transverse section through the flange 12 and the polymer tubes with the integrated channels 2 is shown, showing the two integrated channels of the manifold 11 and their connection to the inlet chamber 6, the two ends of the polymer tubes with the integrated channels 2 and the outlet chamber 7, which is identical to the first variant of the heat exchanger for liquid filled cylindrical battery cells, with assembly breakdown shown in Fig. 1.

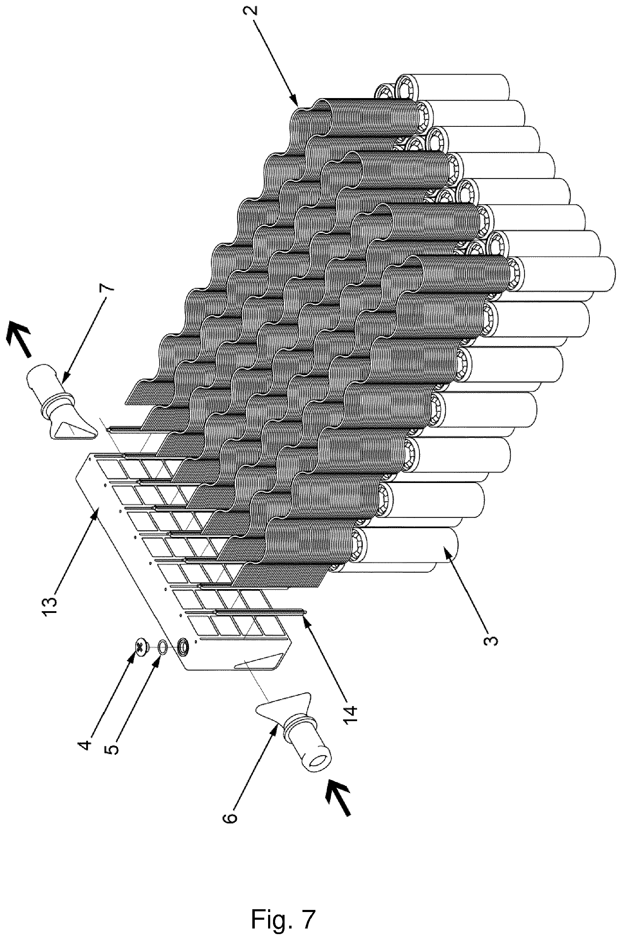

A similar variant of the heat exchanger for liquid filled cylindrical battery cells, with assembly breakdown shown in Fig. 7, consists of four polymer tubes with integrated channels 2, the ends of which are first inserted into respective openings in the manifold 13 and then the seal 14 is applied through the inlet openings on the manifold 13 into cavities of the manifold 13 around the polymer tubes with the integrated channels 2. The seal can be applied by casting or injection moulding. The applied seal adheres to the surface of the manifold 13 and the polymer tubes with the integrated channels 2 and seals the components together. The inlet chamber 6 and the outlet chamber 7 are connected to the manifold 13, e.g., by vibration welding, gluing, or a mechanical joint. The manifold 13 is provided with the bleed valve 4 with the seal of the valve 5. The cylindrical battery cells 3 are seated between the polymer tubes with the integrated channels 2 such that close contact between the heat transfer areas is achieved and space is saved.

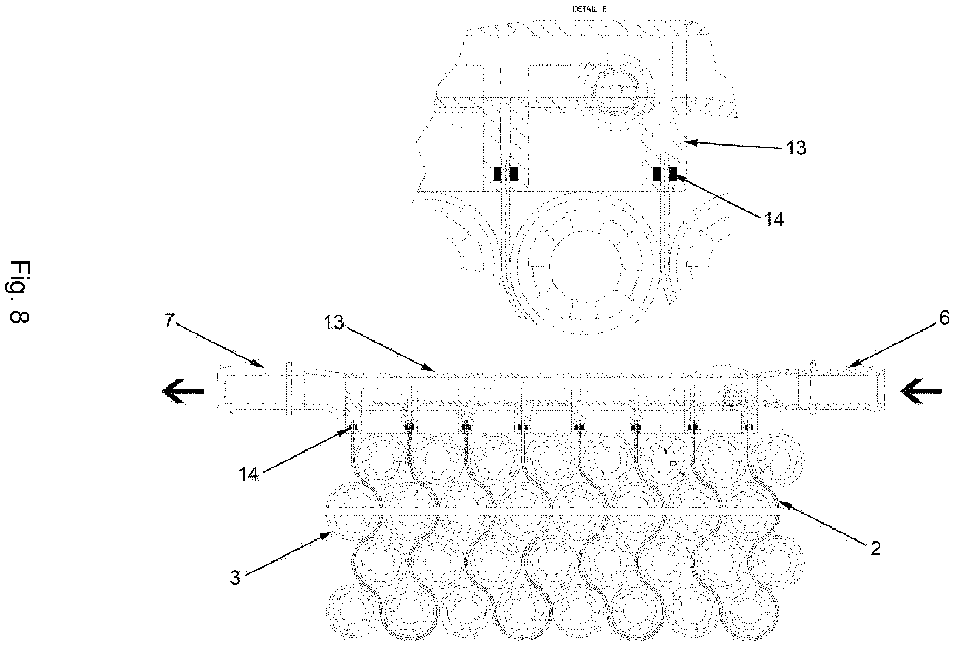

In Fig. 8, a longitudinal section through the centre of one of the two integrated channels of the manifold 13 is shown, together with detail E of the seating of the seal 14 into the cavities in the manifold 13 and the seal of the manifold 13 and the polymer tube with the integrated channels 2.

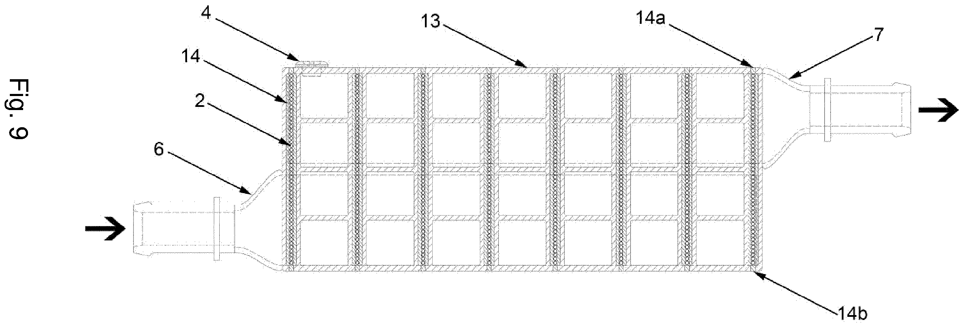

In Fig. 9, a transverse section through the manifold 13, the seal 14, and the polymer tubes with the integrated channels 2 is shown, showing the two integrated channels of the manifold 13 and their connection to the inlet chamber 6, both ends of the polymer tubes with the integrated channels 2, and the outlet chamber 7. Also shown are eight inlet openings 14a and eight bleed openings 14b on the manifold 13, through which the seal 14 is applied. The number, shape, size, location, and other parameters of the inlet openings 14a and bleed openings 14b may be freely adjusted to suit the needs of the seal application.

A similar variant of the heat exchanger for liquid filled cylindrical battery cells may be formed from any number of polymer tubes with the integrated channels 2, the ends of which are connected to two different manifolds or to two identical manifolds with any number of integrated channels in the individual manifolds. This can be preferably used for application of bidirectional liquid flow around the battery cells 3, wherein the seating and connection of the polymer tubes with the integrated channels 2 to the manifolds via the seals 8 or 14 and flanges 9 or 12 is identical to the previous variants.

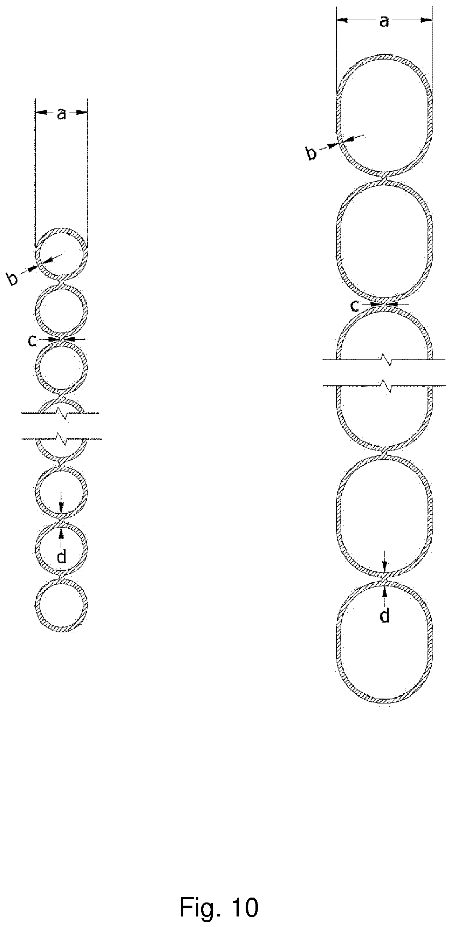

The polymer tube with the integrated channels 2 is the component by means of which heat is exchanged between the battery cells 3 and the heat transfer medium - the liquid that flows through the integrated channels and further through the heat exchanger to the cooling circuit of the vehicle. The polymer tube with the integrated channels 2 is characterised by its profile, two variants of which are shown in Fig. 10. The width of the profile a at the point of the integrated channel is always greater than the width of the profile c at the narrowing point between the two integrated channels. At the same time, the distance between the individual channels d is greater than or equal to the thickness of the wall b. This results in two or more heat transfer areas and/or tangents of the polymer tube with the integrated channels 2 with a reduced thickness of the wall b of less than 0.5 mm while maintaining high internal pressure resistance and spatial flexibility with a very small bending radius. The polymer tube with the integrated channels 2 can be made of polymers and polymer composites by extrusion method or can be modified to the final shape by subsequent elongation.

The manifolds 1, 11, and 13 are components that provide uniform distribution and directing of the liquid into the individual integrated channels in the polymer tubes 2 and at the other end thereof, they also collect and drain the liquid through the connected ports and chambers. The manifolds 1, 11, and 13 may be made of polymers and polymer composites by injection moulding or may be made of metallic materials, composed of several moulded parts which are connected by soldering, or made by casting and then provided with electrical insulation.

The inlet chamber 6 and outlet chamber 7 are components that provide complex shape reduction between the port and the manifold, while distributing and directing the liquid into the manifold 1. Sensors, holders, and/or bleed valves 5 may be preferably placed on the inlet chamber 6 and the outlet chamber 7. The inlet chamber 6 and outlet chamber 7 may be made of polymers and polymer composites by injection moulding or may be made of metallic materials, composed of several moulded parts which are connected by soldering, or made by casting or hydroforming and then provided with electrical insulation.

The flanges 9 and 12 are components that ensure a constant compression and position of the seal 8. To achieve the purpose of the flange, its spatial rigidity and strength are necessary, which can be optimised by ribs, depressions, or, for example, by suitable insertion of metal inserts into the basic material. The flange 9 may be divided into several smaller flanges, and likewise several flanges 12 may be joined in a single flange. The flanges 9 and 12 may be made of polymers and polymer composites by injection moulding or may be made of metallic materials, composed of one or more moulded parts which may be connected by soldering, clinching, or welding or may be made by casting and then provided with electrical insulation.

The seal 8 is component providing the seal between the joint of the polymer tube with the integrated channels 2 and the manifolds 1 and 11. The seal 8 may be made of elastomers or composite materials, for example by moulding or injection moulding. The seal 8 may be applied directly to the polymer tube with the integrated channels 2, or the polymer tube with the integrated channels 2 may be drawn through the opening in the seal 8 with a shape adapted to the profile of the polymer tube with the integrated channels 2.

## Claims

1. A liquid filled heat exchanger for cylindrical battery cells comprising at least one polymer tube (2) that comprises integrated channels for the flow of a heat transfer medium, and at least one manifold (1), an inlet chamber (6) joined to the manifold (1), and an outlet chamber (7) joined to the manifold (1), wherein one end of the polymer tube (2) is joined to the inlet chamber (6) via the manifold (1) and the other end of the polymer tube (2) is joined to the outlet chamber (7) via the manifold (1), and wherein the polymer tube (2) is in contact with a set of at least two cylindrical battery cells (3), **characterised in that** it further comprises a seal (8) and a flange (9), wherein the polymer tube (2) is connected to the manifold (1) via the flange (9) and the seal (8), and that the seal (8) surrounds the entire circumference of the polymer tube (2) and is located between the flange (9) and the manifold (1), wherein the manifold (1) is joined to the flange (9).

2. The liquid filled heat exchanger for cylindrical battery cells of claim 1, **characterised in that** by joining the flange (9) and the manifold (1), the seal (8) is at least partially deformed to seal the joint of the polymer tube (2) to the manifold (1).

3. The liquid filled heat exchanger for cylindrical battery cells of claim 1 or 2, **characterised in that** the profile of the polymer tube (2) with the integrated channels is wider at the levels of the centres of the integrated channels than at the levels of the centres of the distance between two adjacent integrated channels, wherein the thickness of the wall of the polymer tube (2) is less than 0.5 mm and the distance between the individual integrated channels is greater than or equal to the thickness of the wall of the polymer tube (2).

4. The liquid filled heat exchanger for cylindrical battery cells of claims 1 to 3, **characterised in that** the manifold (1) comprises a bleed valve (4).

5. The liquid filled heat exchanger for cylindrical battery cells of claims 1 to 4, **characterised in that** the manifold (1) and the flange (9) are made of a polymer or polymer composite.

6. The liquid filled heat exchanger for cylindrical battery cells of claims 1 to 5, **characterised in that** the manifold (1) is joined to the flange (9) by welding, gluing, screw and/or mechanical joint.
